# EUROPÄISCHE PATENTSCHRIFT

(11) **EP 2 393 738 B1**
(45) Veröffentlichungstag und Bekanntmachung des Hinweises auf die Patenterteilung: **31.08.2016**
(21) Anmeldenummer: 10711825.9
(22) Anmeldetag: 03.02.2010
(51) Int. Cl.: B65G 17/46

(54) **TRANSPORTVORRICHTUNG, TRANSPORTKETTE SOWIE KETTENGLIED**
CONVEYOR DEVICE, CONVEYOR CHAIN AND CHAIN LINK
DISPOSITIF DE TRANSPORT, CHAÎNE DE TRANSPORT ET MAILLON DE CHAÎNE

(30) Priorität: 03.02.2009 DE 202009001268 U
(43) Veröffentlichungstag der Anmeldung: 14.12.2011
(73) Patentinhaber: Polman, Eckhard, St. Jacobs, ON N0B 2N0 (CA)
(72) Erfinder: Polman, Eckhard, St. Jacobs, ON N0B 2N0 (CA)
(74) Vertreter: Grosse Schumacher Knauer von Hirschhausen
(86) Internationale Anmeldenummer: PCT/EP2010/000661
(87) Internationale Veröffentlichungsnummer: WO 2010/089101

(56) Entgegenhaltungen:
- EP-A1- 1 375 351
- WO-A1-2007/017107
- DE-A1- 4 317 698
- DE-A1- 19 817 125
- DE-A1- 19 913 310
- DE-A1-102005 030 116
- DE-U1- 9 012 050
- JP-A- 48 044 900

## Beschreibung

### Gebiet der Erfindung

Die Erfindung betrifft eine Transportvorrichtung, eine Transportkette sowie ein Kettenglied nach dem Oberbegriff des Anspruchs 1, 15 bzw. 16.

### Hintergrund der Erfindung

Aus der WO 2008/104404 A2 ist eine Transportvorrichtung mit einem zwischen Umlenkrollen umlaufenden endlosen Fördergurt bekannt, an dem eine Werkstückaufnahme befestigt ist, wobei ein synchron umlaufender separat ausgestalteter endloser Energieversorgungsstrang vorgesehen ist. Nachteilig bei dieser bekannten Transportvorrichtung sind die aufwendige Wartung und Reparatur. So muss bei einem Defekt im Fördergurt der gesamte Fördergurt ausgetauscht werden. Hierzu ist eine vollständige Demontage der Transportvorrichtung erforderlich.

Zwar sind im Stand der Technik, z. B. aus der DE 199 57 009 A1, Transportvorrichtungen in Form endloser, aus gelenkig miteinerander verbundenen Kettengliedern bestehender Transportketten bekannt. Allerdings sind derartige Transportketten nicht zum Umlaufen um Umlenkrollen vorgesehen und weisen zudem keine Möglichkeit auf, einen Energieversorgungsstrang zu integrieren. JP 34 8044900B beschreibt eine gattungsgemäße Transportvorrichtung.

### Zusammenfassung der Erfindung

Ausgehend hiervon liegt der Erfindung die Aufgabe zugrunde, eine Transportvorrichtung nach dem Oberbegriff des Anspruchs 1 zu schaffen, die bei einfacher Wartung und Reparatur flexibel an unterschiedliche Transportlängen anpassbar sind.

Diese Aufgabe wird entsprechend den Merkmalen des Anspruchs 1 gelöst.

Demnach wird eine Transportvorrichtung mit einem zwischen Umlenkrollen umlaufenden endlosen Transportelement, an dem eine Aufnahmeeinrichtung für zu transportierendes Transportgut vorgesehen ist, und mit einem Energieversorgungsstrang, geschaffen, bei der das Transportelement eine Transportkette mit gelenkig miteinander verbundenen Kettengliedern ist, die jeweils einen Abschnitt des Energieversorgungsstrangs aufweisen und die Abschnitte benachbarter Kettenglieder miteinander gekoppelt sind.

Die Ausgestaltung des Transportelements als Transportkette mit gelenkig miteinander verbundenen Kettengliedern, die jeweils einen Abschnitt eines Energieversorgungsstrangs bilden, weist eine Reihe von Vorteilen gegenüber einer Lösung mit einem Fördergurt auf.

So muss zur Reparatur und Wartung nicht der gesamte Fördergurt demontiert werden. Stattdessen können einzelne Kettenglieder, die einer Reparatur bzw. Wartung bedürfen, aus der Transportkette herausgelöst werden. Der nicht von der Wartung oder Reparatur betroffene Teil der Transportvorrichtung kann in montiertem Zustand verbleiben. Hierdurch ergibt sich eine Zeit- und Kostenersparnis.

Ferner kann die Transportvorrichtung auf einfache Weise flexibel an unterschiedliche Transportlängen angepasst werden. Während bei den bekannten Lösungen eine individuelle Anfertigung eines Fördergurts mit vorgegebener Länge erforderlich ist, kann die erfindungsgemäße Transportkette durch Hinzufügen oder Entfernen einzelner Kettenglieder an veränderte Produktionsbedingungen angepasst werden. Neben der dadurch erzielbaren erhöhten Flexibilität ergibt sich eine erhebliche Kosteneinsparung auch dadurch, dass die verbleibenden Kettenglieder weiter benutzt werden können, während beim Wechsel eines Fördergurts der alte Fördergurt vollständig unbrauchbar wird.

Darüber hinaus weist die erfindungsgemäße Transportvorrichtung eine gegenüber einem Fördergurt erhöhte mechanische Belastbarkeit auf. Insbesondere gibt es keine dem Verbindungsbereich der beiden Enden des Transportgurts vergleichbare mechanische Schwachstelle und die einzelnen Kettenglieder können aus einem hochbelastbaren Material, insbesondere Metall, Kunststoff und/oder einem Verbundmaterial gebildet werden.

Durch die mechanisch festen Verbindungen wird ferner eine hohe Genauigkeit trotz hoher mechanischer Belastbarkeit auch bei hohen Geschwindigkeiten und Beschleunigungen bis z. B. 6 m/s bzw. 10 m/s² erreicht, wobei die Transportkette stabil und präzise durch Rollenlager führbar ist.

Der erfindungsgemäß durch die einzelnen Kettenglieder verlaufende Energieversorgungsstrang stellt dabei eine Energieversorgung bereit, die an beliebiger Stelle der Transportkette abgreifbar ist. Hierbei wird elektrische Energie mittels Stromzufuhr oder mechanische Energie mittels Druckluft, Unterdruck, Gas, Flüssigkeit, einem Fluid wie etwa Hydraulikflüssigkeit/fluid insbesondere an den Umlenkrollen in die Transportkette eingespeist und kann an jedem Kettenglied und insbesondere an mehreren oder an allen Kettengliedern unabhängig von deren derzeitiger Position abgegriffen werden, da sich der Energieversorgungsstrang über die gesamte Transportkette erstreckt. Die Energie kann zum Betrieb und/oder der Steuerung mindestens einer Aufnahmeeinrichtung für ein zu transportierendes Werkstück, beispielsweise in Form einer Saugdüse, eines Greifers oder dergleichen verwendet werden.

Der Energieversorgungsstrang ist dabei zweckmäßigerweise im wesentlichen dicht ausgestaltet, um einen Verlust des Mediums Druckluft, Gas, Hydraulikflüssigkeit oder dergleichen sowie Verschmutzungen und das Eindringen von Störteilchen zu vermeiden. Zweckmäßigerweise erstreckt sich der Energieversorgungsstrang hierfür abschnittsweise durch die einzelnen Kettenglieder hindurch, ist also ein im Kettenglied z.B. durch Bohrungen oder andere Hohlräume ausgebildeter Kanal oder integrierter Schlauch oder ein integriertes Kabel im Fall elektrischer Energie. Diese Ausführungsform ist bei hoher Stabilität und Dichtheit einfach und kostengünstig herstellbar und zudem wartungsarm. Der Energieversorgunsgsstrang kann jedoch auch zumindest abschnittsweise als an den Kettengliedern angesetzter Kanal ausgebildet sein, z.B. durch einen Schlauch oder ein angesetztes Kabel.

Da bevorzugt jedes Kettenglied eine Verbindungsstelle zur Verbindung mit einem vorhergehenden Kettenglied und eine Verbindungsstelle zur Verbindung mit einem nachfolgenden Kettenglied aufweist, kann sich der Abschnitt des Energieversorgungsstrangs von der einen zur anderen Verbindungsstelle erstrecken. Diese Ausführung kann unterbrechungs- und verbindungsstellenfrei insbesondere im Inneren des Kettenglieds erfolgen, wodurch eine hohe Dichtheit bei Schutz gegen äußere Einwirkungen sichergestellt wird.

Die Kettenglieder können einenends Achsschenkel und anderenends eine Achsaufnahme aufweisen, wobei die Achsschenkel eines Kettenglieds die Achsaufnahme eines benachbarten Kettenglieds umgreifen, um die Kette zu bilden. Hierdurch wird eine Gelenkigkeit um eine Achse, zweckmäßigerweie im wesentlichen quer zur Transportrichtung und parallel zur Achse der Umlenkrollen, geschaffen.

Ferner kann ein Kanal in jedem Kettenglied vorgesehen sein, der einen Abschnitt des Energieversorgungsstrangs bildet und sich von einem Achsschenkel zur Achsaufnahme erstreckt und in einer Stirnfläche der Achsaufnahme mündet, die dem Achsschenkel des benachbarten Kettenglieds zugewandt ist. Ein derartiger Kanal ist auf kostengünstige und einfache Weise durch Bohrungen im Kettenglied herstellbar und eignet sich zur Übertragung der Medien Druckluft, Gas oder Hydraulikflüssigkeit mit hohen Drücken, sowie zum Aufnehmen eines Kabels oder von Kabelabschnitten.

Ist zusätzlich ein sich von anderen Achsschenkel zur Achsaufnahme erstreckender und in der diesem anderen Achsschenkel entsprechenden Stirnfläche der Achsaufnahme mündender weiterer Kanal im Kettenglied vorgesehen, kann ein weiterer Energieversorgungsstrang in der Transportkette realisiert werden. Die beiden Energieversorgungsstränge können dabei unabhängig und separat ausgebildet sein und sie können unterschiedliche Energie transportieren, z. B. kann ein Kanal Hydraulikfluid enthalten und der andere Druckluft oder elektrische Energie transportieren.

Kostengünstig, mechanisch stabil und einfach herstellbar ist eine gelenkige Verbindung zweier Kettenglieder durch Verwendung eines Achsbolzens. So kann ein Achsbolzen sich durch einen Achsschenkel bis in die Achsaufnahme hinein erstrecken, und ein weiterer Achsbolzen kann sich durch den weiteren Achsschenkel in die gegenüberliegende Stirnseite der Achsaufnahme hinein erstrecken.

Wenn der Achsbolzen einen einenends in seiner der Achsaufnahme zugewandten Stirnfläche und anderenends in seiner Mantelfläche mündenden Bolzenkanal aufweist, kann so auf einfache Weise eine Verbindung des Energieversorgungsstrangsabschnitts eines Kettenglieds mit dem entsprechenden Energieversorgungsstrangabschnitts des benachbarten Kettenglieds gebildet werden. Die Ausbildung des Bolzenkanals ist dabei mechanisch einfach zu bewerkstelligen durch zwei Bohrungen, eine in die Stirnfläche und eine in die Mantelfläche des Achsbolzens. Hierbei kann der eine Achsbolzen einem Energieversorgungsstrang und der andere Achsbolzen einem weiteren Energieversorgungsstrang zugeordnet sein, sofern durch die Transportkette zwei unabhängige Energieversorgungsstränge verlaufen.

In einer weiteren Ausführungsform können wenigstens zwei Kettenglieder und insbesondere alle Kettenglieder über ein Verbindungselement kreuzgelenkig miteinander verbunden sein. Die Kettenglieder der Transportkette sind dann um mehrere Achsen gegeneinander gelenkig schwenkbar. Die Transportkette kann in dieser Ausführungsform beliebig im Raum geführt werden, z.B. um mit Kurven oder um eine Neigung der Werkstücke zu bewirken, wenn diese z.B. horizontal von einem Stapel aufgenommen und in einem Winkel dazu abgegeben werden müssen.

Das Verbindungselement einen Kanal oder zwei getrennte Kanäle aufweisen.

Im einfachsten Fall weist das Verbindungselement vier Verbindungsschenkel auf, die sich in etwa kreuzförmig aus einem Verbindungselementhauptkörper heraus erstrecken, oder ist kreuzförmig ausgestaltet aus vier Verbindungsschenkeln. Jeweils zwei gegenüber liegende Verbindungsschenkel sind dabei mit einem Kettenglied und die beiden anderen, ebenfalls einander gegenüberliegenden Verbindungsschenkel mit dem benachbarten Kettenglied verbunden, z.B. in entsprechende Bohrungen dichtend eingesetzt.

Im Fall eines einzigen Energieversorgungsstrangs kann sich ein ein Kanal in alle vier Verbindungsschenkel hinein erstrecken. Im Fall zweier Energieversorgungsstränge kann sich ein Kanal in zwei benachbarte Verbindungsschenkel und ein weiterer Kanal in die beiden anderen Verbindungsschenkel hinein erstrecken.

Die Kanalmündung ist bevorzugt in der Mantelfläche eines Verbindungsschenkels vorgesehen, so dass sie in eingesetztem Zustand des Verbindungsschenkels mit einer Kanalmündung eines Kanals im aufnehmenden Kettenglied gekoppelt ist. Da das Kettenglied gegenüber dem Verbindungsschenkel verdrehbar sein sollte, ist die Mündung z.B. in Form eines Schlitzes vorgesehen, kann aber auch eine Bohrung sein.

Ferner wird eine Transportkette für eine derartige Transportvorrichtung geschaffen, die mehrere miteinander verbundene Kettenglieder aufweist, von denen wenigstens zwei einen Abschnitt eines Energieversorgungsstrangs aufweisen, wobei die Abschnitte miteinander gekoppelt sind.

Schließlich wird ein Kettenglied für eine Transportkette einer Transportvorrichtung geschaffen, das einen Abschnitt eines Energieversorgungsstrangs aufweist und wie vorstehend oder nachstehend im Zusammenhang mit der Transportvorrichtung und/oder Kette beschrieben verschieden ausgestaltet sein kann. Die jeweiligen Merkmale sind auch losgelöst von der Transportkette und der Transportvorrichtung einzeln oder in beliebigen Kombinationen auf das einzelne Kettenglied anwendbar.

Das Kettenglied kann mehrteilig aufgebaut sein. Insbesondere kann das Kettenglied aus einer Ober- und einer Unterschale bestehen, die an den einander zugewandten Oberflächen Aussparungen aufweisen können, die die Kanäle oder Teile des bzw. der Energieversorgungsstränge bilden. Gegebenenfalls kann zwischen Ober- und Unterschale ein Mittelteil oder eine Mittelteilkonstruktion sandwichartig eingesetzt sein.

Die Transportkette kann aus identischen oder unterschiedlichen Kettengliedern zusammengesetzt sein. Der Energieversorgungsstrang kann endlos sein.

Weitere Merkmale und Eigenschaften der Erfindung ergeben sich aus der nachfolgenden Beschreibung beispielhafter Ausführungsformen unter Bezugnahme auf die beigefügten Zeichnungen.

### Figurenbeschreibung

Fig. 1a, 1b und 1c illustrieren eine Transportvorrichtung in Draufsicht, in Seitenansicht bzw. einen vergrößerten Abschnitt davon.
Fig. 2a, 2b und 2c illustrieren eine weitere Ausführungsform der Transportvorrichtung in Draufsicht, Seitenansicht bzw. einen vergrößerten Abschnitt davon.
Fig. 3a, 3b und 3c illustrieren eine weitere Ausführungsform der Transportvorrichtung in Draufsicht, Seitenansicht bzw. einen vergrößerten Abschnitt davon.
Fig. 4a illustriert einen Schnitt durch drei aufeinander folgende Kettenglieder.
Fig. 4b zeigt eine Seitenansicht auf nur das mittlere Kettenglied der Fig. 4a.
Fig. 4c ist eine Seitenansicht auf einen Transportkettenabschnitt.
Fig. 4d ist ein Schnitt entlang der Linie A-A der Fig. 4c.
Fig. 5 illustriert eine weitere Ausführungsform eines Kettenglieds.
Fig. 6a und Fig. 6b zeigen jeweils eine weitere Ausführungsform einer Transportkette.
Fig. 6c, 6d, 6e und 6f zeigen eine weitere Ausführungsform einer Transportkette in gebogenem Zustand in Draufsicht, in geradem Zustand in Draufsicht, in geradem Zustand in Seitenansicht bzw. in in einer anderen Richtung gebogenem Zustand in Seitenansicht.
Fig. 6g und 6h zeigen ein Kettenglied der Ausführungsform gemäß Fig. 6c bis 6f im Quer- bzw. Längsschnitt.
Fig. 7a illustriert ein Verbindungselement im Querschnitt.
Fig. 7b zeigt ein weiteres Verbindungselement in Draufsicht. Fig. 7c und 7e zeigen zwei Seitenansichten dieses Verbindungselements. Fig. 7d zeigt einen Schnitt entlang der Linie A-A der Fig. 7c.
Fig. 8a und 8b illustrieren ein Kettenabschnitt im Bereich einer Umlenkrolle in Seitenansicht bzw. Draufsicht.
Fig. 9 illustriert eine Auslenkung der Transportkette.

### Beschreibung der Ausführungsformen

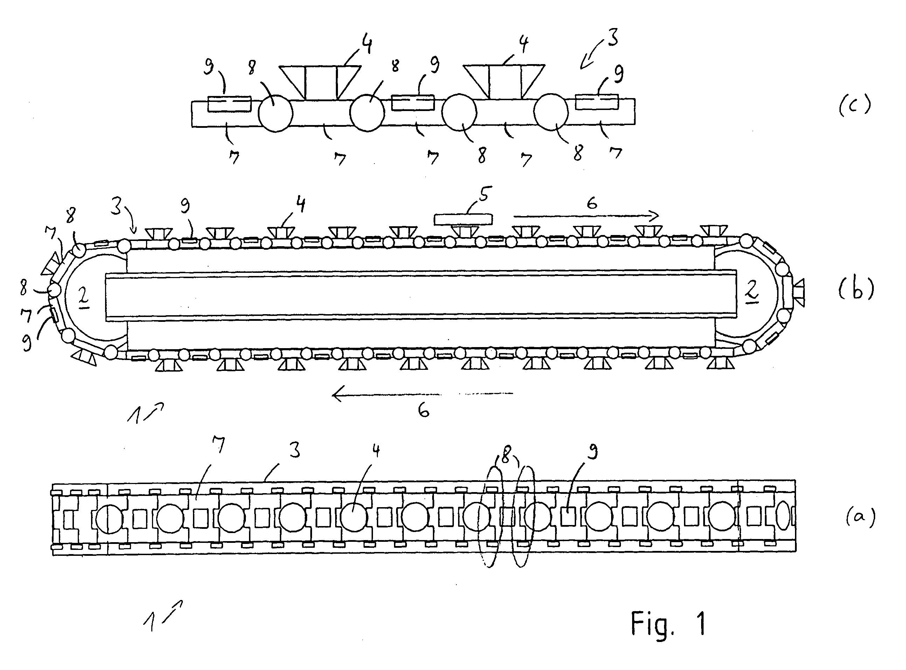

Die in Fig. 1 dargestellte Transportvorrichtung 1 umfasst ein hier zwischen zwei Umlenkrollen 2 umlaufendes endloses Transportelement in Form einer Transportkette 3 mit Aufnahmeeinrichtungen 4 für zu transportierendes Transportgut. Die Aufnahmeeinrichtungen 4 können Werkstücke 5, von denen beispielhaft nur eines illustriert ist, aufnehmen und entlang der Transportrichtung 6, in der die Transportkette 3 umläuft, transportieren.

Der Transport kann dabei liegend oder hängend erfolgen. Es können verschiedene Werkstücke 5 transportiert werden, beispielsweise Platinen, Metallplatten, Glasplatten, Fensterscheiben, Kfz-Teile, elektronische Bauelemente etc. Die Werkstücke 5 müssen nicht flach sein, sondern können beliebig geformt sein.

Die Aufnahmeeinrichtungen 4 sind in der in Fig. 1 dargestellten Ausführungsform als Saugnäpfe dargestellt. Sie erzeugen ein Vakuum, um die Werkstücke saugend festzuhalten. Die Werkstücke 5 werden von den Aufnahmeeinrichtungen 4 an geeigneten Stellen aufgenommen, z. B. von einem Stapel Autoscheiben, entlang der Transportrichtung 6 transportiert und einem Zielort zugeführt. Die Aufnahmeeinrichtungen 4 sind dabei insbesondere individuell derart steuerbar, dass sie z. B. ein Vakuum zur Aufnahme eines Werkstücks 5 bereithalten oder erzeugen, ggf. in Richtung auf das Werkstück zur Aufnahme desselben ausgelenkt werden und am Zielort das Werkstück freigeben.

Die Transportkette 3 besteht, vgl. Fig. 1c, aus gelenkig miteinander verbundenen Kettengliedern 7. Die Kettenglieder 7 sind hier beispielhaft mit einem flachen Hauptkörper und einem Gelenkbereich 8 illustriert, vgl. Fig. 1a. Der Gelenkbereich 8 ist in der dargestellten Ausführungsform, in der sich die Transportkette 3 um zwei Umlenkrollen 2 herum erstreckt, so ausgestaltet, dass die einzelnen Kettenglieder eine Beweglichkeit zumindest im wesentlichen parallel zur Achse der Umlenkrollen 2 aufweisen.

In der dargestellten Ausführungsform ist beispielhaft jedes zweite Kettenglied mit einer Aufnahmeeinrichtung 4 versehen. Die nicht mit einer Aufnahmeeinrichtung 4 versehenen Kettenglieder 7 weisen hier beispielhaft ein elektronisches Steuerelement 9 auf. Jeder Aufnahmeeinrichtung 4 ist dabei ein elektronisches Steuerelement 9 zugeordnet, das die Aufnahmeeinrichtung 4 zumindest hinsichtlich der Aufnahme eines Werkstücks 5 und der Abgabe eines aufgenommenen Werkstücks 5 steuern kann. Gegebenenfalls sind die Aufnahmeeinrichtungen 4 weiter voneinander beabstandet. Auch kann ein elektronisches Steuerelement 9 die Steuerlogik für mehrere Aufnahmeeinrichtungen 4 aufweisen, so dass einige Kettenglieder 7 unbelegt sind oder anstelle der dargestellten Steuerelemente 9 Aufnahmeeinrichtungen 4 aufweisen.

Wenigstens eine der Umlenkrollen 2 weist an ihrem Außenumfang eine Verzahnung auf, die mit der Transportkette 3 derart in Eingriff bringbar ist, dass durch Drehantrieb der Umlenkrolle 2 die Transportkette 3 in der Transportrichtung angetrieben wird.

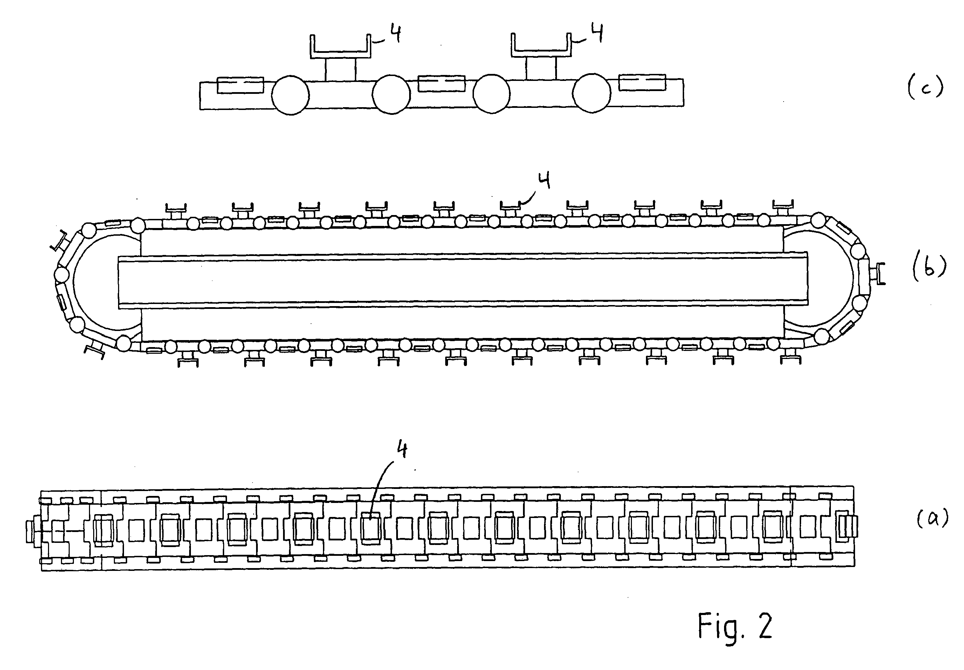

In der in Fig. 2 dargestellten Ausführungsform sind die Aufnahmeeinrichtungen 4 in Form von mechanischen Greifern dargestellt. Derartige mechanische Greifer können über Druckluft, Gas, hydraulisch und/oder elektrisch betätigt werden.

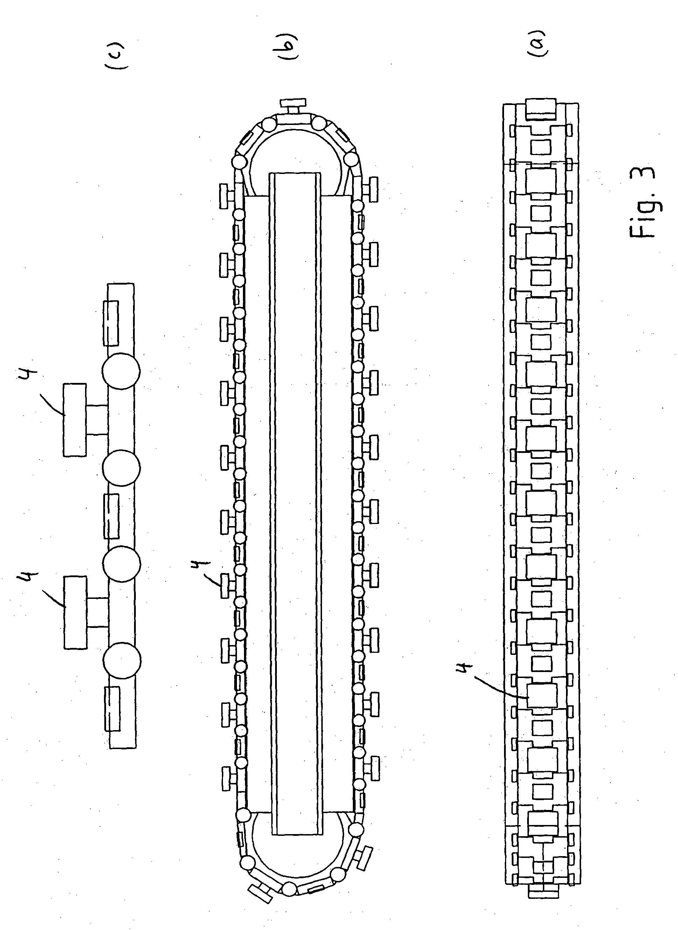

Fig. 3 illustriert eine Ausführungsform, bei der die Aufnahmeeinrichtungen 4 Elektromagneten sind.

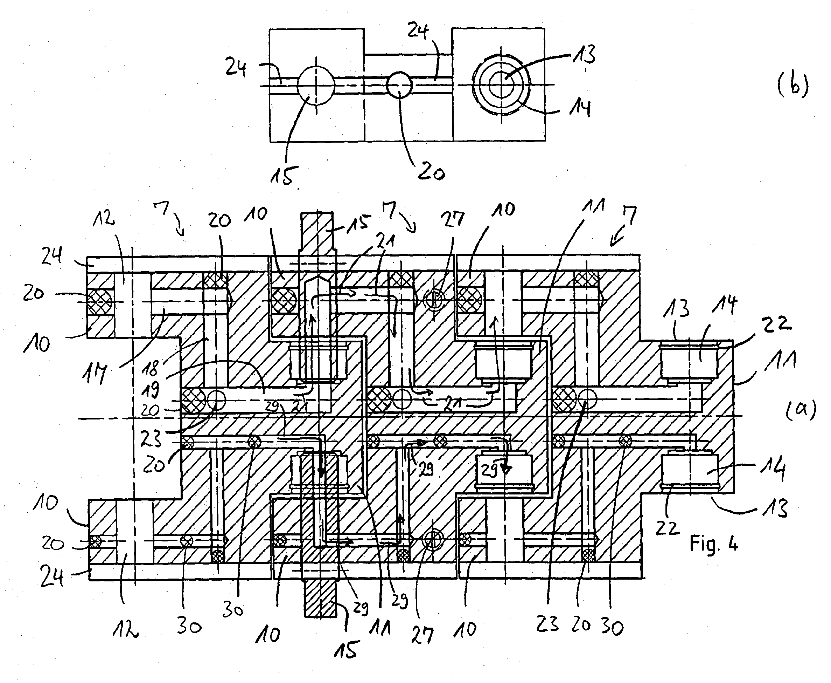

Der Aufbau und die Verbindung beispielhafter Kettenglieder 7 ist in Fig. 4a illustriert.

Jedes dargestellte Kettenglied 7 weist hier einenends zwei Achsschenkel 10 und anderenends eine Achsaufnahme 11 auf. Die Achsaufnahme 11 eines Kettenglieds 7 wird von den Achsschenkeln 10 des benachbarten Kettenglieds 7 umgriffen. Zur gelenkigen Verbindung der Kettenglieder 7 weisen die Achsschenkel 10 Achsbohrungen 12 auf, die sich durch die Dicke des jeweiligen Achsschenkels 10 hindurch erstrecken. Fluchtend mit den Achsbohrungen 12 weisen die Achsaufnahmen 11 zweckmäßigerweise zwei Kopfbohrungen 13 auf, und zwar jeweils eine Kopfbohrung 13 auf der dem einen Achsschenkel 10 benachbarten Stirnfläche der Achsaufnahme 11 und eine weitere Kopfbohrung 13 auf der dem anderen Achsschenkel 10 benachbarten Stirnfläche der Achsaufnahme 11. Eingesetzt in die Kopfbohrungen 13 können Lagerbuchsen 14, z. B. in Form von Nadellagern, oder dergleichen sein.

Werden zwei benachbarte Kettenglieder 7 derart hintereinander angeordnet, dass die Achsschenkel 10 des einen Kettenglieds 7 die Achsaufnahme 11 des anderen Kettenglieds 7 umgreifen und die Achsbohrungen 12 mit den Kopfbohrungen 13 fluchten, kann eine gelenkige feste Verbindung durch Eintreiben von Achsbolzen 15 hergestellt werden. Hierzu wird ein erster Achsbolzen 15 durch den einen Achsschenkel 10 hindurch gesteckt und in die Lagerbuchse 14 der Achsaufnahme 11 eingesetzt. Ein weiterer Achsbolzen 15 wird durch die andere Achsaufnahme 11 gesteckt und in die entsprechende andere Lagerbuchse 14 eingesetzt. Die Achsbolzen 15 werden sodann relativ zu den Achsschenkeln 10 befestigt, z. B. durch eine Stift-, Klemm- oder Schraubverbindung oder dergleichen wie etwa eine Madenschraube. Im Ergebnis bilden die Achsbolzen 15 zusammen mit den Achsschenkeln 10 eine feste Einheit, so dass das Kettenglied 7 über die Achsbolzen 15 um die Achsbolzenachse 16 sich in den Lagerbuchsen 14 drehen kann. Die Verbindung kann in allen Ausführungsformen auch anders herum erfolgen, indem die Achsbolzen 15 mit der Achsaufnahme 11 eine feste Einheit bilden und in Lagerbuchsen in den Achsschenkeln 10 drehbar sind.

Die Kettenglieder 7 bilden zusammen einen Energieversorgungsstrang, der sich bevorzugt durch die gesamte Transportkette 3 und jedenfalls zumindest durch einen Teil davon hindurch erstreckt. Der Abschnitt des Energieversorgungsstrangs im Kettenglied 7 wird zweckmäßigerweise durch die Achsbohrung 12, drei weitere Bohrungen 17, 18, 19 sowie die Kopfbohrung 13 hergestellt. Die Bohrung 17 erstreckt sich quer zur Achsbohrung 12 entlang des Achsschenkels 10, aber nicht durch diesen hindurch. Sie kreuzt die Achsbohrung 12, so dass zwischen der Achsbohrung 12 und der Bohrung 17 eine Verbindung besteht. Die Bohrung 18 erstreckt sich durch einen mittleren Abschnitt des Kettenglieds 7 quer zur Bohrung 17 bis in etwa zur Mitte des Kettenglieds 7. Quer hierzu erstreckt sich die Bohrung 19, die eine Verbindung zur Kopfbohrung 13 bildet. Damit ergibt sich ein Kanal zwischen der Achsbohrung 12 und der Kopfbohrung 13 durch das Kettenglied 7 hindurch. Die Enden der Bohrungen 17, 18, 19 werden dabei zweckmäßigerweise mittels Dichtungen 20 abgedichtet. Der Energieversorgungsstrang erstreckt sich somit entlang der Pfeile 21 durch die benachbarten Kettenglieder 7.

Dichtungen beispielsweise in Form von O-Ringen 22 dichten die Achsbolzen 15 gegenüber den Lagerbuchsen 14 ab. Eine Abdichtung der Achsbolzen 15 gegenüber den Achsbohrungen 12 ist möglich aber nicht unbedingt erforderlich, wenn die Achsbolzen 15 einen passgenauen Durchmesser aufweisen oder in die Achsbohrungen 12 klemmend eingesetzt sind, da keine Relativbewegung zwischen Achsbolzen 15 und Achsbohrungen 12 vorgesehen ist.

Über Ventilöffnungen 23, die an beliebiger Stelle im Kanal angeordnet sein können, ist der Kanal mit einem Medium wie etwa Druckluft, Gas oder einer Hydraulikflüssigkeit oder dergleichen beaufschlagbar. Die Ventilöffnungen 23 sind zweckmäßigerweise geschlossen und nur geöffnet, wenn sie mit Füllvorrichtungen an den Umlenkrollen 2 in Eingriff stehen. So kann über die Umlenkrollen 2 der Kanal mit dem Medium gefüllt werden und gefüllt bleiben.

Das Medium im Kanal dient der Betätigung der Aufnahmeeinrichtungen 4. So kann Druckluft aus dem Kanalabschnitt in einem Kettenglied 7 einer Venturidüse auf dem Kettenglied 7 zugeführt werden, die aus der Druckluft ein Vakuum erzeugt und damit die Saugnäpfe betätigt, die die Werkstücke 5 mittels Vakuum halten können. Auch die in Form von Greifern ausgeführten Aufnahmeeinrichtungen 4 können ihre Energie durch das Medium im Kanal beziehen, z. B. durch eine Hydraulikflüssigkeit. Wenn die Aufnahmeeinrichtungen 4 z. B. Elektromagnete umfassen, überträgt der Energieversorgungsstrang zweckmäßigerweise keine mechanische Energie, sondern elektrische Energie. Hierzu können in den Kanälen bzw. Kanalabschnitten im Kettenglied Kabel verlaufen.

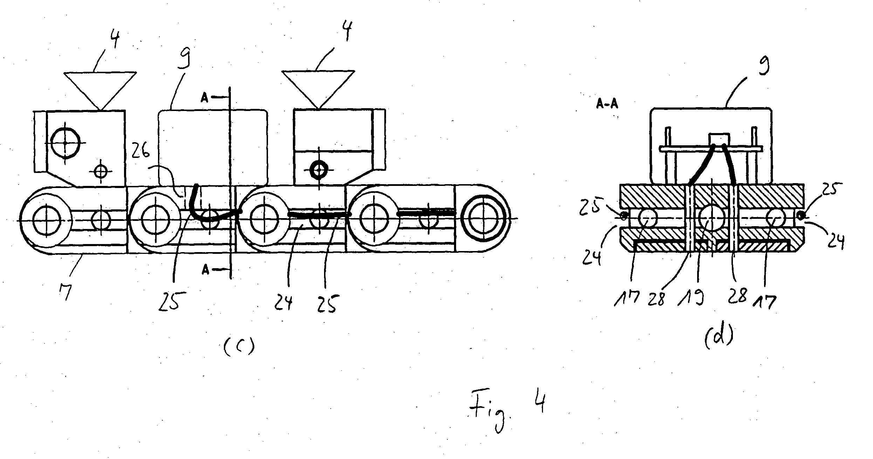

Die Kettenglieder 7 weisen zudem vorzugsweise Kabelkanäle 24 auf. Die Kabelkanäle 24 sind vorzugsweise randseitig an den Kettengliedern 7 angeordnet, vgl. auch Fig. 4c, die jedoch eine weitere Ausführungsform der Kettenglieder 7 zeigt. Durch die Kabelkanäle 24 können sich Kabel 25 erstrecken. Diese Kabel 25 können dabei über Durchtrittsöffnungen 26, vgl. Fig. 4c, oder außenseitig freiliegend zu den elektronischen Steuerelementen 9 an den Kettengliedern 7 geführt werden, um diese mit elektrischer Energie und/oder Signalen zu versorgen. Die Kabel 25 bilden dabei einen Versorgungsstrang für elektrische Energie, der sich ebenfalls endlos über die gesamte Transportkette 3 erstrecken kann. Zweckmäßigerweise wird hierzu ein Zweidraht-Bus oder dergleichen, insbesondere ein ASI-Bus verwendet. So kann ein Kabelkanal 24 für ein Kabel 25 mit einer ersten Polarität, z. B. dem Pluspol, vorgesehen sein, während der andere Kabelkanal 25 mit einem Kabel 25 für ein elektrisches Potenzial einer zweiten Polarität, z. B. Masse, vorgesehen sein kann. Über diese beiden Kabel 25 kann die elektrische Energie zum Betrieb der elektronischen Steuerelemente bereitgestellt werden. Zudem kann über diese beiden Kabel 25 auch eine insbesondere digitale Signalübertragung zu und ggf. von den elektronischen Steuerelementen hin realisiert werden. Die Einspeisung der Signale erfolgt dabei auf bekannte Weise an den Umlenkrollen 2 z.B. über Kontaktstifte, die an Kontaktflächen 27, vgl. Fig. 4a, an- oder in Kontaktbohrungen 28, vgl. Fig. 4d, eingreifen.

Die Ausführungsformen der Fig. 4a und Fig. 4c, 4d unterscheiden sich durch die Anzahl der Kanäle. In Fig. 4a sind zwei Kanäle vorgesehen, während in Fig. 4d nur ein Kanal vorgesehen ist.

Der erste Kanal in Fig. 4a verläuft entlang der Pfeile 21. Der zweite Kanal verläuft unabhängig davon entlang der Pfeile 29. Dieser Kanal kann einen zweiten, vom ersten Energieversorgungsstrang unabhängigen Energieversorgungsstrang bilden, wobei hierzu ebenfalls Ventilöffnungen vorgesehen werden sollten. Im dargestellten Beispiel sind jedoch Dichtungen 30 vorgesehen, so dass eine Verbindung zwischen den Kettengliedern 7 entlang der Pfeile 29 unterbrochen ist. Die Dichtungen 30 sind dabei vorzugsweise durch Einrichtungen auf dem Kettenglied 7 insbesondere gesteuert überbrückbar.

In Fig. 4b ist beispielhaft nur ein Kanal vorgesehen. Die Bohrung 19 ist zweckmäßigerweise mittig angeordnet und über Bohrungen 17 mit beiden Achsbohrungen 12 verbunden.

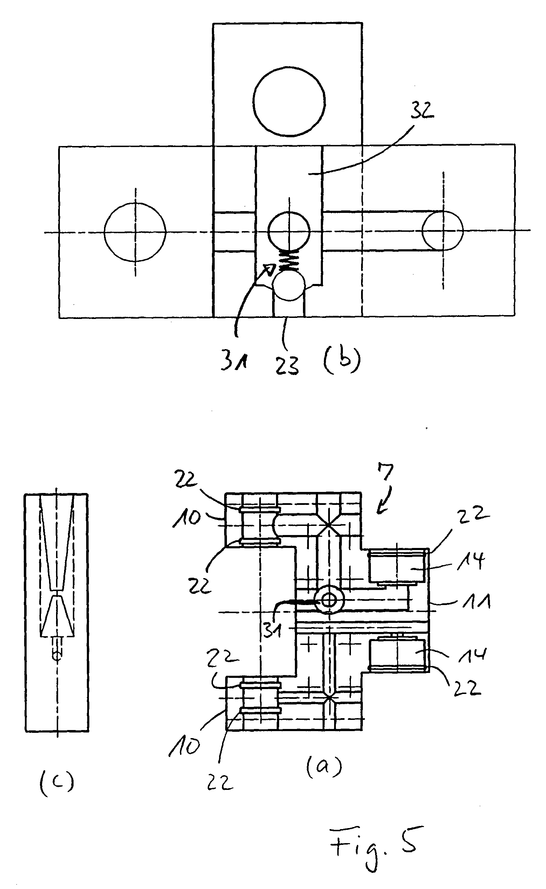

Fig. 5 illustriert ein einzelnes Kettenglied 7 einer weiteren Ausführungsform. Ein Ventil 31, in Fig. 5b in Form eines Rückschlagventils ausgeführt, ist im Kanal vorgesehen, um Medium an den Umlenkrollen 2 in den Kanal einzuspeisen.

Eine Verbindung 32 erstreckt sich hier von der Ventilöffnung 23 an die Kettengliedoberfläche, wo sie beispielsweise in einer Venturidüse, vgl. Fig. 5c, mündet, die ein Vakuum für die Aufnahmeeinrichtung 4 insbesondere gesteuert aus der Druckbeaufschlagung erzeugen kann.

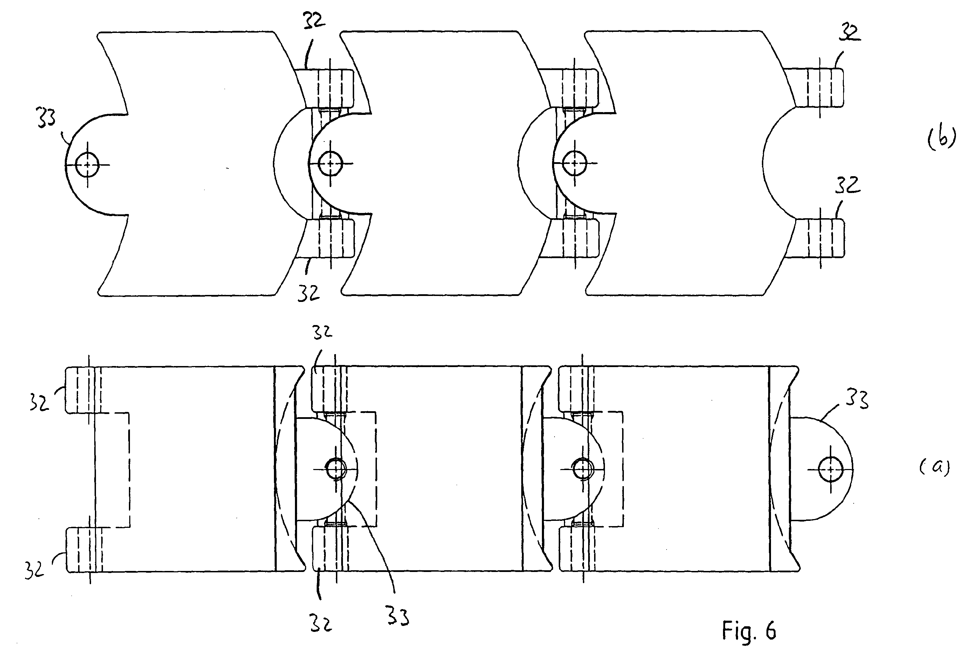

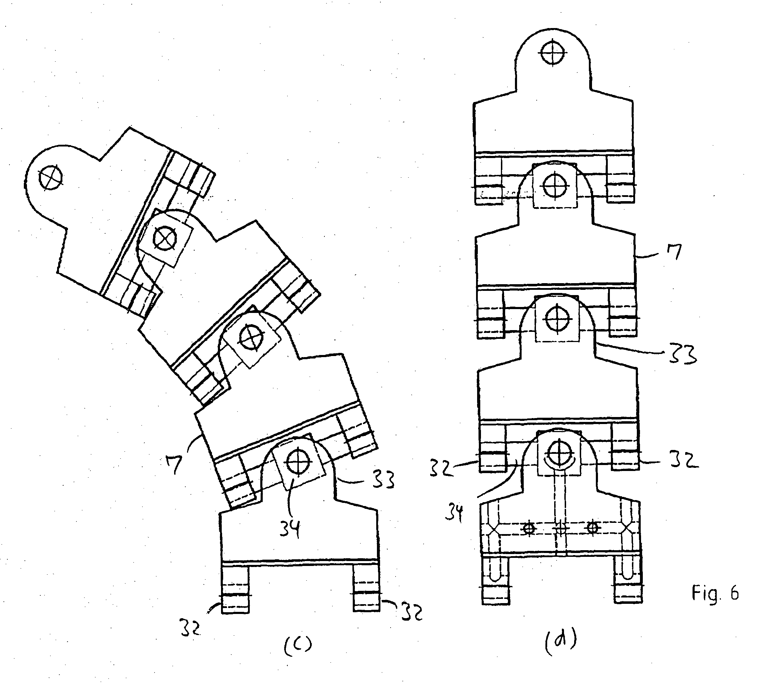

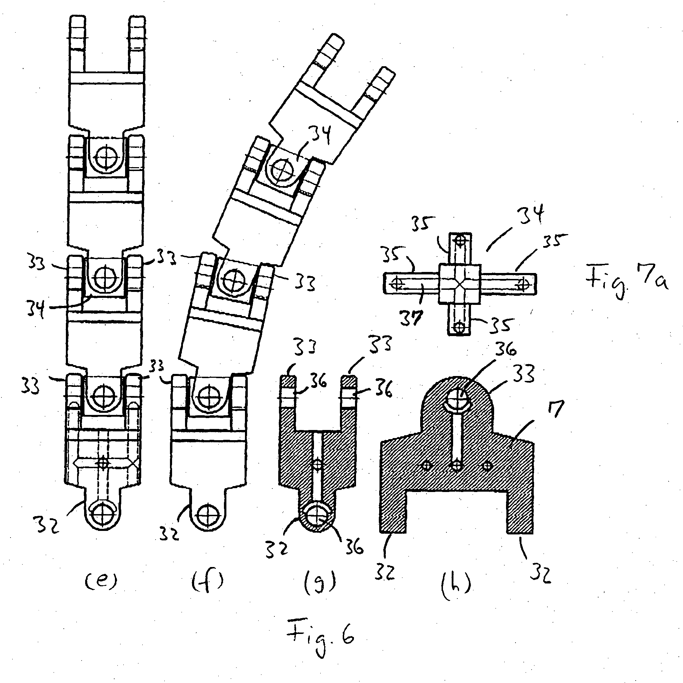

In Fig. 6 sind weitere Ausführungsformen der Erfindung dargestellt. In diesen Ausführungsformen ist eine Gelenkigkeit in zwei Achsen nach Art eines Kardangelenks vorgesehen.

Hierzu weisen die Kettenglieder 7 an beiden Enden jeweils zwei Achsschenkel 32, 33 auf, deren Achsen senkrecht aufeinander stehen. Es ergibt sich eine Gelenkigkeit um beide Achsen, wodurch die Transportkette 3 nicht nur linear geführt werden muss, sondern vielmehr auch entlang Kurven geführt werden kann.

Fig. 6a, 6b illustrieren zwei verschiedene Ausführungsformen mit Kettengliedkörpern, die eine weite Auslenkung ermöglichen.

In Fig. 6c ist eine weitere Ausführungsform dargestellt, bei der die Transportkette um eine Achse quer zur Transportkettenoberfläche gekrümmt ist, um beispielsweise um eine Kurve geführt zu werden. Ein gerader Abschnitt dieser Transportkette ist in Fig. 6d dargestellt. Eine Seitenansicht auf Fig. 6d ist Fig. 6e. Fig. 6f zeigt die Ansicht der Fig. 6d in ausgelenktem Zustand und illustriert, dass die Transportkette beliebig ausgelenkt werden kann quer zur Auslenkung der Fig. 6c. Die Auslenkungen der Fig. 6c, 6f sind beliebig kombinierbar.

Benachbarte Kettenglieder 7 sind hier über ein Verbindungselement 34 kreuzgelenkig miteinander verbunden. Hierzu weist das Verbindungselement 34 zweckmäßigerweise vier Verbindungsschenkel 35 auf, die sich in etwa kreuzförmig erstrecken und in Bohrungen 36 der Achsschenkel 32, 33 einsetzbar sind.

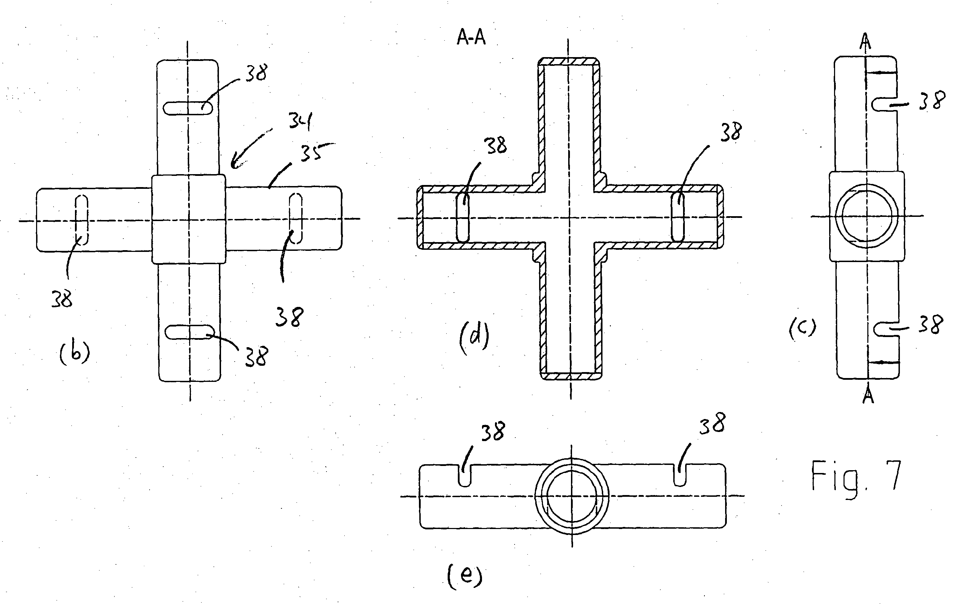

Das Verbindungselement 34 kann dabei einen Verbindungskanal 37 aufweisen, vgl. Fig. 7a, der sich insbesondere in alle vier Verbindungselemente 34 hinein erstreckt. Diese Ausführungsform eignet sich für eine Transportkette 3 mit einem Energieversorgungsstrang wie in Fig. 4d. Sind zwei Energieversorgungsstränge vorgesehen wie in Fig. 4a, kann das Verbindungselement zwei getrennte Verbindungskanäle 37 aufweisen insbesondere dergestalt, dass sich ein Verbindungskanal in zwei benachbarte Verbindungsschenkel und ein weiterer Verbindungskanal in die beiden anderen Verbindungsschenkel hinein erstreckt.

Die Verbindungskanäle 37 münden jeweils in einer Kanalmündung 38, die in der Mantelfläche des jeweiligen Verbindungsschenkels 35 vorgesehen und mit einer Kanalmündung eines Kanals im den jeweiligen Verbindungsschenkel aufnehmenden Kettenglied 7 koppelbar ist, vgl. Fig. 7b bis 7e.

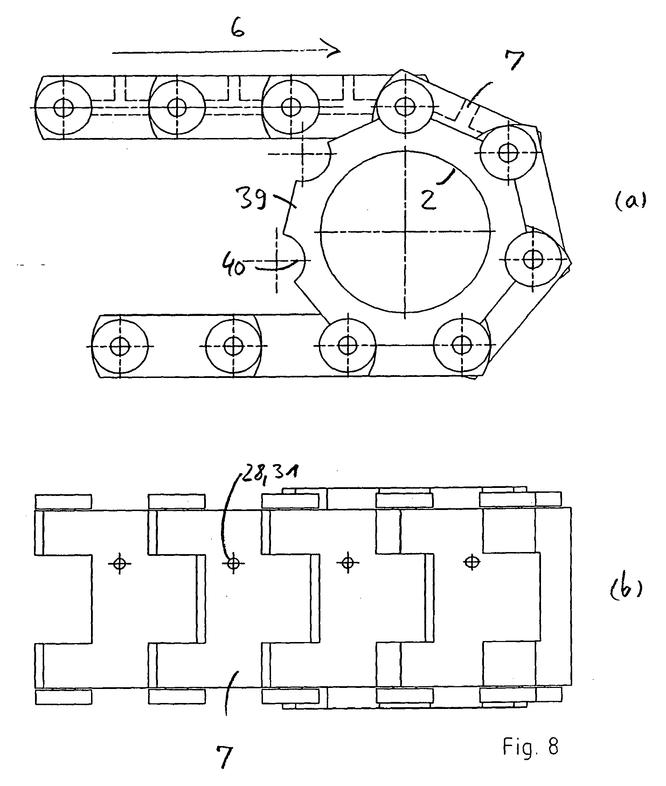

Die Umlenkung der Transportkette 3 ist in Fig. 8 illustriert. Bevorzugt weist die Umlenkrolle 2 Zähne 39 und/oder Aussparungen 40 auf, die mit der Transportkette 3 in Eingriff bringbar sind, umfasst also insbesondere ein Zahnrad oder zwei oder mehr Zahnräder. Eine Drehung der Umlenkrolle 2 mittels eines Elektromotors oder dergleichen bewirkt dadurch eine Bewegung der Transportkette 3 in die Transportrichtung 6. Der Eingriff erfolgt zweckmäßigerweise im Bereich der Verbindung zwischen den Kettengliedern, z.B. am Achsbolzen 15 bzw. am Verbindungselement 34, kann aber auch am Kettengliedkörper erfolgen, wenn dieser entsprechend ausgestaltet ist.

Während des Kontakts mit der Umlenkrolle 2 wird Energie der Transportkette 3 auf bekannte Weise zugeführt durch eine Drehdurchführung. Hierzu können Kontaktstifte die elektrische Verbindung zu Kontaktflächen 27 oder Kontaktbohrungen 28 herstellen und Ventile eine Einspeisung von Medium über die Ventile 31 in den Energieversorgungsstrang ermöglichen.

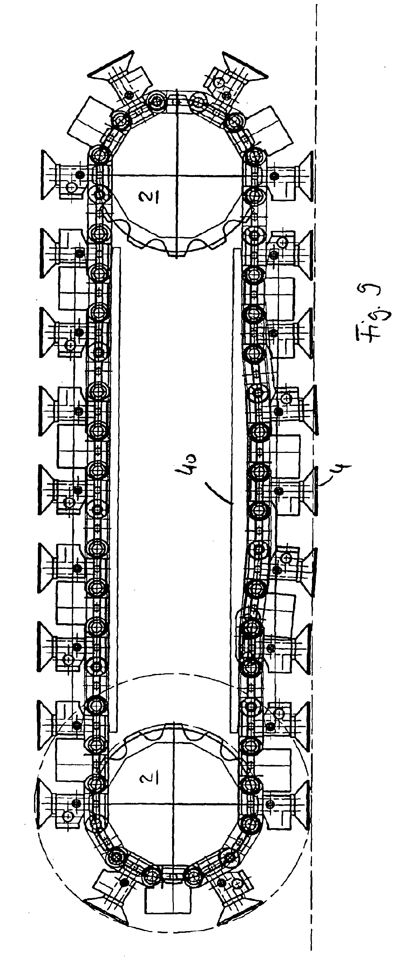

Fig. 9 illustriert, wie die Kettenglieder 7 über eine seitliche Führung 40 beispielsweise in Form einer oder zweier Führungsschienen ausgelenkt werden können. Dies kann vorteilhaft sein, um die Aufnahmeeinrichtungen 4 in Richtung auf die Werkstücke 5 auszulenken für eine Aufnahme derselben, oder um Werkstücke 5 freizugeben.

Die Kettenglieder können einstückig hergestellt sein und Bohrungen aufweisen, die Kanäle oder Kanalabschnitte bilden. Zudem ist es möglich, die Kettenglieder mehrteilig zu gestalten zwecks einfacherer Herstellung und Wartung. So kann ein Kettenglied mit einer Oberschale und einer Unterschale, oder einer Ober-und/oder einer Unterschale auf einem Grundkörper, oder mit einer Mittelschichtkonstruktion zwischen einer Ober- und einer Unterschale, vorgesehen sein. Kanäle oder Kanalabschnitte können in der Oberschale, in der Unterschale, im Grundkörper und/oder in der Mittelschichtkonstruktion ausgebildet sein. Die einzelnen Teile können verschraubt, verklebt oder anderweitig vorzugsweise lösbar miteinander verbunden sein.

### Bezugszeichenliste

- 1: Transportvorrichtung
- 2: Umlenkrolle
- 3: Transportkette
- 4: Aufnahmeeinrichtung
- 5: Werkstück
- 6: Transportrichtung
- 7: Kettenglied
- 8: Gelenkbereich
- 9: elektronisches Steuerelement
- 10: Achsschenkel
- 11: Achsaufnahme
- 12: Achsbohrung
- 13: Kopfbohrung
- 14: Lagerbuchse
- 15: Achsbolzen
- 16: Achsbolzenachse
- 17, 18, 19: Bohrung
- 20: Dichtung
- 21: Pfeil
- 22: O-Ring
- 23: Ventilöffnung
- 24: Kabelkanal
- 25: Kabel
- 26: Durchtrittsöffnung
- 27: Kontaktfläche
- 28: Kontaktbohrung
- 29: Pfeil
- 30: Dichtung
- 31: Ventil
- 32, 33: Achsschenkel
- 34: Verbindungselement
- 35: Verbindungsschenkel
- 36: Bohrung
- 37: Verbindungskanal
- 38: Kanalmündung
- 39: Zahn
- 40: Aussparung
- 41: Führung

## Patentansprüche

1. Transportvorrichtung (1) mit einem zwischen Umlenkrollen (2) umlaufenden endlosen Transportelement, an dem eine Aufnahmeeinrichtung (4) für zu transportierendes Transportgut (5) vorgesehen ist, und mit einem Energieversorgungsstrang, wobei das Transportelement eine Transportkette (3) mit gelenkig miteinander verbundenen Kettengliedern (7) ist, die jeweils einen Abschnitt des Energieversorgungsstrangs aufweisen, der im jeweiligen Kettenglied (7) vorgesehen ist, **dadurch gekennzeichnet, dass** alle Abschnitte benachbarter Kettenglieder (7) miteinander gekoppelt sind, sich der Energieversorgungstrang über die gesamte Transportkette erstreckt und die Energieversorgung an beliebiger Stelle der Transportkette abgreifbar ist.

2. Transportvorrichtung nach Anspruch 1, **dadurch gekennzeichnet, dass** jedes Kettenglied (7) eine Verbindungsstelle zur Verbindung mit einem vorhergehenden Kettenglied (7) und eine Verbindungsstelle zur Verbindung mit einem nachfolgenden Kettenglied (7) aufweist und der Abschnitt des Energieversorgungsstrangs sich von der einen zur anderen Verbindungsstelle erstreckt.

3. Transportvorrichtung nach Anspruch 1 oder 2, **dadurch gekennzeichnet, dass** ein Kettenglied (7) einenends zwei Achsschenkel (10) und anderenends eine Achsaufnahme (11) aufweist und die Achsschenkel (10) des Kettenglieds (7) eine Achsaufnahme (11) eines benachbarten Kettenglieds (7) umgreifen.

4. Transportvorrichtung nach Anspruch 3, **dadurch gekennzeichnet, dass** im Kettenglied (7) ein sich von einem der Achsschenkel (10) zur Achsaufnahme (11) erstreckender und in der diesem Achsschenkel (10) zugeordneten Stirnfläche der Achsaufnahme (11) mündender Kanal vorgesehen ist, der den Abschnitt des Energieversorgungsstrangs im Kettenglied (7) bildet.

5. Transportvorrichtung nach Anspruch 4, **dadurch gekennzeichnet, dass** im Kettenglied (7) ein sich vom anderen der Achsschenkel (10) zur Achsaufnahme (11) erstreckender und in der diesem anderen Achsschenkel (10) zugeordneten Stirnfläche der Achsaufnahme (11) mündender weiterer Kanal vorgesehen ist, der einen Abschnitt eines weiteren Energieversorgungsstrangs bildet.

6. Transportvorrichtung nach einem der Ansprüche 3 bis 5, **dadurch gekennzeichnet, dass** zumindest einer der Achsschenkel (10) über einen Achsbolzen (15) gelenkig mit der Achsaufnahme (11) verbunden ist.

7. Transportvorrichtung nach Anspruch 6, **dadurch gekennzeichnet, dass** der Achsbolzen (15) einen einenends in seiner der Achsaufnahme (11) zugewandten Stirnfläche und anderenends in seiner Mantelfläche mündenden Bolzenkanal aufweist, der den Energieversorgungsstrangabschnitt eines Kettenglieds (7) mit dem entsprechenden Energieversorgungsstrangabschnitt des benachbarten Kettenglieds (7) verbindet.

8. Transportvorrichtung nach einem der Ansprüche 1 bis 7, **dadurch gekennzeichnet, dass** benachbarte Kettenglieder (7) über ein Verbindungselement (34) kreuzgelenkig miteinander verbunden sind.

9. Transportvorrichtung nach Anspruch 8 oder 9, **dadurch gekennzeichnet, dass** das Verbindungselement (34) einen Verbindungskanal (37) oder zwei getrennte Verbindungskanäle aufweist.

10. Transportvorrichtung nach Anspruch 8, **dadurch gekennzeichnet, dass** das Verbindungselement (34) vier Verbindungsschenkel (35) aufweist, die sich in etwa kreuzförmig erstrecken.

11. Transportvorrichtung nach Anspruch 10, **dadurch gekennzeichnet, dass** sich ein Verbindungskanal (37) in alle vier Verbindungsschenkel (35) hinein erstreckt.

12. Transportvorrichtung nach Anspruch 10, **dadurch gekennzeichnet, dass** sich ein Verbindungskanal in zwei benachbarte Verbindungsschenkel und ein weiterer Verbindungskanal in die beiden anderen Verbindungsschenkel hinein erstreckt und die Verbindungskanäle jeweils einen Abschnitt eines von zwei Energieversorgungssträngen bilden.

13. Transportvorrichtung nach einem der Ansprüche 10 bis 12, **dadurch gekennzeichnet, dass** eine Kanalmündung (38) in der Mantelffäche eines Verbindungsschenkels (35) vorgesehen und mit einer Kanalmündung (38) eines Kanals im den jeweiligen Verbindungsschenkel (35) aufnehmenden Kettenglied (7) gekoppelt ist.

14. Transportkette für eine Transportvorrichtung nach einem der Ansprüche 1 bis 13, **gekennzeichnet durch** ein Kettenglied nach einem der nachfolgenden Ansprüche.

## Claims

1. Conveyor device (1) comprising an conveyor element which revolves between deflecting rollers (2), on which a receiving device (4) for conveying goods (5) to be conveyed is provided, and comprising a power supply line, wherein the conveyor element is a conveyor chain (3) having chain links (7) hinged together, each link comprising a section of the power supply line which is provided in the respective chain link (7), **characterized in that** all sections of adjacent chain links (7) are coupled to one another, the power supply line extends over the entire conveyor chain and the power supply can be tapped at any point in the conveyor chain.

2. Conveyor device according to Claim 1, **characterized in that** each chain link (7) comprises a connection point for connecting to a preceding chain link (7) and a connection point for connecting to a following chain link (7), and the section of the power supply line extends from the one connection point to the other.

3. Conveyor device according to Claim 1 or 2, **characterized in that** a chain link (7) comprises two steering knuckles (10) at one end and an axle mounting (11) at the other end and the steering knuckles (10) of the chain link (7) engage around an axle mounting (11) of an adjacent chain link (7).

4. Conveyor device according to Claim 3, **characterized in that** in the chain link (7), a channel is provided, which extends from one of the steering knuckles (10) to the axle mounting (11) and opens out in the end face of the axle mounting (11) assigned to this steering knuckle (10), and which forms the section of the power supply line in the chain link (7).

5. Conveyor device according to Claim 4, **characterized in that** in the chain link (7), a further channel is provided, which extends from the other steering knuckle (10) to the axle mounting (11) and opens out in the end face of the axle mounting (11) assigned to this other steering knuckle (10), and which forms a section of a further power supply line.

6. Conveyor device according to any one of Claims 3 to 5, **characterized in that** at least one of the steering knuckles (10) is hinge-connected to the axle mounting (11) via an axle pin (15).

7. Conveyor device according to Claim 6, **characterized in that** the axle pin (15) has a bolt channel which opens at one end into its end face facing towards the axle mounting (11) and at the other end into its outer surface, wherein said channel connects the power supply line section of a chain link (7) to the corresponding power supply line section of the adjacent chain link (7).

8. Conveyor device according to any one of Claims 1 to 7, **characterized in that** adjacent chain links (7) are connected to each other in a cross-linked manner via a connecting element (34).

9. Conveyor device according to Claim 8 or 9, **characterized in that** the connecting element (34) comprises one connecting channel (37) or two separate connecting channels.

10. Conveyor device according to Claim 8, **characterized in that** the connection element (34) comprises four connecting arms (35), which extend approximately in the shape of a cross.

11. Conveyor device according to Claim 10, **characterized in that** one connecting channel (37) extends into all four connecting arms (35).

12. Conveyor device according to Claim 10, **characterized in that** one connecting channel extends into two adjacent connecting arms and a further connecting channel into the other two connecting arms and the connecting channels each form one section of one of two power supply lines.

13. Conveyor device according to any one of Claims 10 to 12, **characterized in that** a channel opening (38) is provided in the outer surface of a connecting arm (35) and is connected to a channel opening (38) of a channel in the chain link (7) accommodating the respective connecting arm (35).

14. Conveyor chain for a conveyor device according to any one of Claims 1 to 13, **characterized by** a chain link according to any one of the subsequent claims.

## Revendications

1. Dispositif de transport (1) comportant un élément de transport continu tournant entre des rouleaux d'inversion (2), au niveau duquel il est prévu un dispositif récepteur (4) pour les marchandises à transporter (5), et une ligne d'alimentation en énergie, l'élément de transport étant une chaîne transporteuse (3) comportant des maillons de chaîne reliés entre eux de manière articulée (7) qui présentent respectivement une section de la ligne d'alimentation en énergie qui est prévue dans le maillon de chaîne respectif (7), **caractérisé en ce que** toutes les sections des maillons de chaîne voisins (7) sont couplées ensemble et que la ligne d'alimentation en énergie s'étend sur l'ensemble de la chaîne transporteuse et qu'on peut recourir à l'alimentation en énergie à n'importe quel endroit de la chaîne transporteuse.

2. Dispositif de transport selon la revendication 1, **caractérisé en ce que** chaque maillon de chaîne (7) présente un point de liaison pour liaison avec un maillon de chaîne précédent (7) et un point de liaison pour liaison avec un maillon de chaîne suivant (7) et que la section de la ligne d'alimentation en énergie s'étend d'un point de liaison à un autre.

3. Dispositif de transport selon la revendication 1 ou 2, **caractérisé en ce qu'**un maillon de chaîne (7) présente à une extrémité deux branches d'axe (10) et à l'autre extrémité un support d'axe (11) et que les branches d'axe (10) du maillon de chaîne (7) entourent un support d'axe (11) d'un maillon de chaîne voisin (7).

4. Dispositif de transport selon la revendication 3, **caractérisé en ce qu'**il est prévu dans le maillon de chaîne (7) un canal s'étendant depuis une des branches d'axe (10) jusqu'au support d'axe (11) et débouchant dans la surface avant associée à cette branche d'axe (10) du support d'axe (11) et qui constitue la section de la ligne d'alimentation en énergie dans le maillon de chaîne (7).

5. Dispositif de transport selon la revendication 4, **caractérisé en ce qu'**il est prévu dans le maillon de chaîne (7) un autre canal (11) s'étendant depuis l'autre branche d'axe (10) jusqu'au support d'axe (11) et débouchant dans la surface avant associée à cette autre branche d'axe (10) du support d'axe (11) et qui constitue une section d'une autre ligne d'alimentation en énergie.

6. Dispositif de transport selon une des revendications 3 à 5, **caractérisé en ce qu'**au moins une des branches d'axe (10) est reliée de manière articulée par un pivot d'axe (15) au support d'axe (11).

7. Dispositif de transport selon la revendication 6, **caractérisé en ce que** le pivot d'axe (15) présente un canal de pivot débouchant à une extrémité dans sa surface avant tournée vers le support d'axe (11) et à l'autre extrémité dans sa surface d'enveloppe et qui relie la section de ligne d'alimentation en énergie d'un maillon de chaîne (7) à la section de ligne d'alimentation en énergie du maillon de chaîne voisin correspondant (7).

8. Dispositif de transport selon une des revendications 1 à 7, **caractérisé en ce que** les maillons de chaîne voisins (7) sont reliés entre eux en articulation croisée par un élément de liaison (34).

9. Dispositif de transport selon la revendication 8 ou 9, **caractérisé en ce que** l'élément de liaison (34) présente un canal de liaison (37) ou deux canaux de liaison séparés.

10. Dispositif de transport selon la revendication 8, **caractérisé en ce que** l'élément de liaison (34) présente quatre branches de liaison (35) qui s'étendent approximativement en forme de croix.

11. Dispositif de transport selon la revendication 10, **caractérisé en ce qu'**un canal de liaison (37) s'étend dans l'intérieur des quatre branches de liaison (35).

12. Dispositif de transport selon la revendication 10, **caractérisé en ce qu'**un canal de liaison s'étend dans l'intérieur de deux branches de liaison voisines et qu'un autre canal de liaison s'étend dans l'intérieur des deux autres branches de liaison et que les canaux de liaison constituent respectivement une section d'une des deux lignes d'alimentation en énergie.

13. Dispositif de transport selon une des revendications 10 à 12, **caractérisé en ce qu'**une embouchure de canal (38) est prévue dans la surface d'enveloppe d'une branche de liaison (35) et couplée avec une embouchure de canal (38) dans le maillon de chaîne (7) recevant la branche de liaison respective (35).

14. Chaîne de transport pour dispositif de transport selon une des revendications 1 à 13, **caractérisé par** un maillon de chaîne selon une des revendications suivantes.
